# FASCICULE DE BREVET EUROPEEN

(11) **EP 1 838 167 B1**
(45) Date de publication et mention de la délivrance du brevet: **03.04.2013**
(21) Numéro de dépôt: 05826430.0
(22) Date de dépôt: 15.12.2005
(51) Int. Cl.: A23K 1/18, A23K 1/16, A23K 1/00

(54) **ALIMENT POUR CHIEN DU TYPE BRACHYCEPHALE**
NAHRUNGSMITTEL FÜR KURZKÖPFIGE HUNDE
FOOD FOR SHORT-HEADED DOGS

(30) Priorité: 15.12.2004 FR 0413369
(43) Date de publication de la demande: 03.10.2007
(73) Titulaire: Royal Canin S.A., 30470 Aimargues (FR)
(72) Inventeur: GUILLOTEAU, Aurélien, F-30470 Aimargues (FR); SERVET, Eric, F-30470 Aimargues (FR)
(74) Mandataire: Cornish, Kristina Victoria Joy
(86) Numéro de dépôt international: PCT/EP2005/056819
(87) Numéro de publication internationale: WO 2006/064042

(56) Documents cités:
- WO-A-01/87084
- FR-A- 2 710 500
- FR-A- 2 720 944
- FR-A- 2 725 113
- FR-A- 2 849 349
- US-A- 5 567 466
- US-A- 6 010 720
- ANONYMOUS: "Retorting of foods in fibre-based package" RESEARCH DISCLOSURE, KENNETH MASON PUBLICATIONS, WESTBOURNE, GB, vol. 432, no. 79, avril 2000 (2000-04), XP007125934 ISSN: 0374-4353

## Description

La présente invention concerne un aliment sec pour chien présentant une forme générale de vague afin de diminuer le temps de préhension et d'augmenter le temps de mastication de l'aliment. Cet aliment suivant l'invention est particulièrement destiné aux chiens brachycéphales tels que le boxer ou le bulldog anglais.

Il est généralement admis que les chiens domestiques descendent d'un même ancêtre commun, le loup gris (Savolainen et al., 2002), et présentent ainsi les caractéristiques morphologiques de la mâchoire des carnassiers adaptées pour attraper des proies vivantes ou mortes en les mordant, puis pour déchirer leurs chairs et les mastiquer.

Au cours des siècles, la domestication des chiens par l'homme a été accompagnée par des croisements pour privilégier certaines caractéristiques morphologiques tels que la taille ou la robe du chien. Ainsi, il existe désormais un grand nombre de races de chiens dont certaines présentent une grande sensibilité aux maladies buccodentaires et/ou des difficultés à la préhension et à la mastication liées directement à la morphologie de leur mâchoire.

Il est, par ailleurs, bien connu de classer les chiens en fonction de leur format mais également de classer les races canines en trois types de crâne distincts. Ainsi, on distingue d'une part trois grandes catégories de format : les petites races (1 à 10 kg), les races moyennes (11 à 25 Kg) et les grandes races (26 à 80 Kg et plus) et, d'autre part, trois types de morphologie crânienne : les dolichocéphales, les mésocéphales et les brachycéphales. Afin de classer les races canines dans l'un des types de crâne sus-mentionné, on utilise l'indice céphalique qui correspond à la largeur du crâne multipliée par cent et divisée par la longueur du crâne. Les dolichocéphales qui présentent une base du crâne étroite et un museau très allongé ont un indice céphalique inférieur à 50. Les mésocéphales qui présentent une base du crâne et un museau globalement de même longueur ont un indice céphalique sensiblement égal à 50. Quant aux brachycéphales, ils ont un crâne court, large et rond et présentent un indice céphalique inférieur à 50. Les chiens brachycéphales présentent un prognathisme plus ou moins marqué selon les races. On entend par prognathisme une saillie en avant de l'une des deux mâchoires. Parmi les chiens brachycéphales, le boxer et le bulldog anglais présentent un prognathisme dit inférieur, c'est-à-dire qu'ils présentent une mandibule faisant saillie en avant et un maxillaire raccourci.

Ces particularités morphologiques des chiens brachycéphales induisent, outre des pathologies bucco-dentaires telles que l'hyperplasie gingivale et le chevauchement des dents de lait et des dents adultes, des problèmes de respiration et une insuffisance de mordant, des problèmes de préhension et de mastication des aliments qui peuvent être à l'origine de pathologies gastriques et/ou bucco-dentaires.

En effet, ces chiens brachycéphales présentant un maxillaire plus court que la mandibule, leurs incisives supérieures et inférieures ne peuvent former une pince ce qui rend la préhension des aliments difficiles. De plus, les brachycéphales présentent un maxillaire plus large que celui des autres chiens au niveau des prémolaires et des molaires, ce qui favorise l'ingurgitation des aliments sans mastication.

La difficulté de préhension des aliments induit un stress pour ces chiens et l'absence de mastication desdits aliments se traduit par une ingestion trop rapide qui peut provoquer un étranglement du chien, ainsi qu'une digestion difficile et des problèmes bucco-dentaires.

Il est bien connu des vétérinaires qu'une ingestion trop rapide d'aliment peut provoquer la formation de tartre et de plaque dentaire qui sont à l'origine de toutes las maladies parodontales (A. Grimberg et Ph. Beltramo, Recueil de Médecine Vétérinaire, 1991, 167 (10/11), 997-1003). Afin de combattre la formation de tartre et de plaque dentaire, plusieurs solutions ont été proposées. C'est le cas, par exemple, des brevets EP 0 575 021 et US 5,431,927 déposés par la société Colgate-Palmolive compagny qui décrivent un aliment extrudé, nutritionnellement équilibré, en forme de cylindre ou de disque et contenant des striations fibreuses. On connaît, par ailleurs, les brevets EP 0 552 897 et US 5,296,209 également déposés par la société Colgate-Palmolive compagny qui décrivent un produit à mâcher consistant en une matrice cellulaire flexible comestible contenant un matériau cellulosique et un additif.

On connaît également la demande de brevet français FR 2 849 349 qui décrit un objet à mâcher de grande taille pour des chiens de grande taille.

Bien que ces solutions permettent de limiter la formation de tartre et de plaques dentaires, elles ne permettent pas de résoudre les problèmes digestifs induits par une ingestion trop rapide des aliments.

On connait enfin le document WO0187084 qui décrit un aliment sec destiné à l'alimentation des chiens du type mésocéphalique, se présentant sous la forme d'un parallélépipède à faces plates ou légèrement bombées, présentant des dimensions de 29 à 40 mm x 29 à 40 mm x 19 à 30 mm.

En effet, il est bien connu des vétérinaires qu'une ingestion trop rapide d'aliments provoque de l'aérophagie, avec accumulation rapide de gaz qui dilatent l'estomac pouvant conduire à un vovulus gastrique (W.G. Guilford, Strombeck's Small Animal Gastroenterology, 3rd Edition, W.B. Saunders Compagny Ed., 1996, pp 303-317). De plus, une ingestion trop rapide des aliments est susceptible d'engendrer le syndrome dilatation-torsion de l'estomac du chien sans pour autant que la nature ni la qualité des aliments puissent être incriminées (Véronique Viateau, Recueil de Médecine Vétérinaire, 1993, 169 (11/12), 985-997 ; C.F. Burrows et L.A. Ignaszewski, Journal of Small Animal Practice, 1990, 31, 495-501).

L'un des buts de l'invention est donc de remédier à tous ces problèmes en proposant un aliment sec dont la forme et les dimensions permettent de réduire le temps de préhension et d'augmenter la durée de la mastication dudit aliment.

A cet égard, on observera que les aliments industriels pour chiens se classent en deux grandes catégories : des aliments humides dits pâtés et des aliments secs tels que des croquettes, des granulés, des miettes, des flocons, etc... Sur le marché des aliments pour animaux de compagnie, ce sont les aliments secs qui connaissent actuellement les taux de croissance les plus élevés.

En effet, par rapport aux aliments humides, les aliments secs offrent de nombreux avantages. Ils sont pratiques à utiliser et faciles à conserver. Par ailleurs, ils sont plus économiques que les aliments humides compte tenu de leur taux d'humidité inférieur à 14% qui confère à 1 kg d'aliment sec l'équivalent des apports nutritionnels de 4 Kg d'aliment humide.

On distingue deux grandes familles d'aliments secs pour chiens : les aliments monocomposants et les aliments multicomposants. Les aliments monocomposants sont des alimenst dont les composants unitaires sont identiques et les aliments multicomposants sont des aliments comprenant au moins deux composants unitaires différents.

La demanderesse a découvert, de façon surprenante, qu'il est possible de diminuer le temps de préhension et d'augmenter la durée de la mastication d'un aliment par les chiens, et par conséquent de ralentir l'ingestion de l'aliment, et plus particulièrement par les chiens brachycéphales tels que le boxer ou le bulldog anglais par exemple, en leur offrant un aliment sec dont un composant unitaire présente une forme bien définie.

A cet égard, et conformément à l'invention, il est proposé un aliment sec destiné à l'alimentation des chiens du type contenant au moins une source de protéines d'origine animale ou végétale et/ou au moins une source de glucides lents ou rapides et/ou au moins une source de matière grasse d'origine animale ou végétale, qu'il s'agisse d'un aliment monocomposant ou d'un aliment multicomposant, et se présentant globalement sous la forme d'un parallélépipède, remarquable en ce qu'au moins deux faces opposées du parallélépipède comprennent au moins un creux et au moins une bosse, ledit creux et ladite bosse d'une première face s'étendant au droit de la bosse et respectivement du creux de la face opposée du parallélépipède procurant audit aliment une forme générale de vague.

Dans un mode de mise en oeuvre préférentielle de l'invention, chaque creux consiste en une concavité, chaque bosse consiste en une convexité et le rayon de courbure de chaque concavité est différent du rayon de courbure de chaque convexité.

Par ailleurs, les dimensions de l'aliment ont une influence sur les propriétés d'amélioration de la préhension et d'augmentation de la durée de mastication.

Ainsi, le parallélépipède présente, un volume compris entre 5000 et 8000 mm³ et des dimensions de 25 à 35 mm X 15 à 25 mm X 5 à 11 mm.

D'autres avantages et caractéristiques ressortiront mieux de la description qui va suivre de plusieurs variantes d'exécution, données à titre d'exemples non limitatifs, du dispositif enrouleur/dérouleur comportant un mécanisme d'arrêt conforme à l'invention, en référence aux dessins annexés sur lesquels :
- la figure 1 est une vue en perspective d'un aliment sec conforme à l'invention,
- la figure 2 est une vue en coupe longitudinale de l'aliment sec suivant l'invention représenté sur la figure 1,
- la figure 3 est une vue de dessus de l'aliment sec suivant l'invention,
- la figure 4 est un tableau regroupant des croquettes de l'art antérieur et des croquettes conformes à l'invention pour des chiens de la race boxer,
- la figure 5 est un graphique sous forme d'histogramme des temps moyens de préhension des différents modèles de croquettes consignés dans le tableau de la figure 4,
- la figure 6 est un graphique sous forme d'histogramme des temps moyens de mastication des différents modèles de croquettes consignés dans le tableau de la figure 4,
- la figure 7 est un graphique représentant la répartition des formes de croquettes selon les temps de préhension et de mastication,
- la figure 8 est un tableau classant les modèle de croquette suivant leur temps de préhension décroissant et leur temps de mastication croissant,
- la figure 9 est un graphique représentant la relation entre la surface des croquettes et le temps de préhension,
- la figure 10 est un graphique représentant la relation entre le volume des croquettes et le temps de mastication,
- la figure 11 est un tableau regroupant des croquettes de l'art antérieur et des croquettes conformes à l'invention pour des chiens de la race bulldog anglais,
- la figure 12 est un graphique sous forme d'histogramme des temps moyens de préhension des différents modèles de croquettes consignés dans le tableau de la figure 11,
- la figure 13 est un graphique sous forme d'histogramme des temps moyens de mastication des différents modèles de croquettes consignés dans le tableau de la figure 11,
- la figure 14 est un graphique représentant la répartition des formes de croquettes selon les temps de préhension et de mastication,
- la figure 15 est un tableau classant les modèle de croquette suivant leur temps de préhension décroissant et leur temps de mastication croissant,
- la figure 16 est un graphique représentant la relation entre la surface des croquettes et le temps de préhension,
- la figure 17 est un graphique représentant la relation entre le volume des croquettes et le temps de mastication.

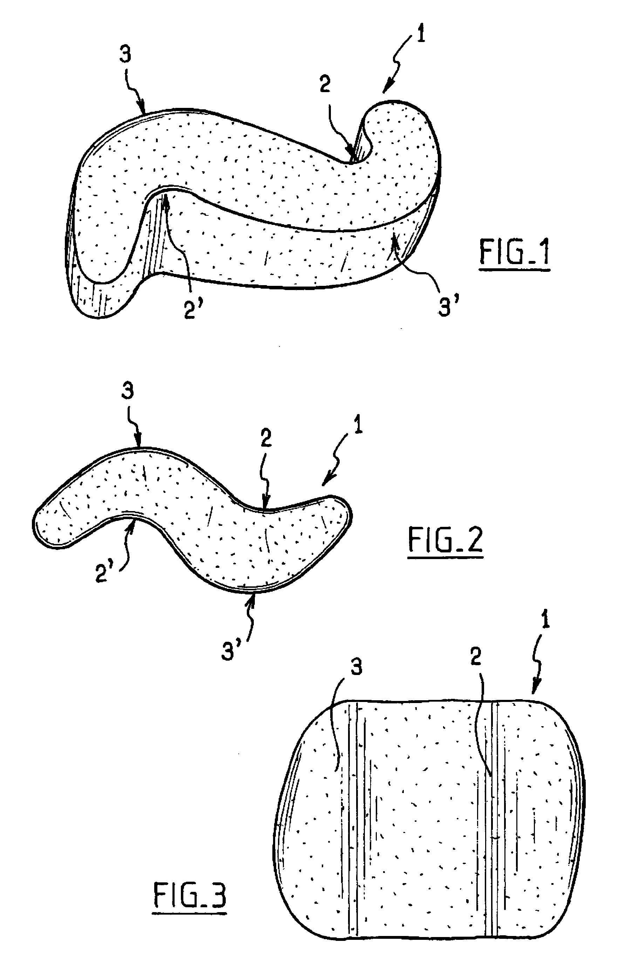

En référence aux figures 1 à 3, l'aliment sec destiné à l'alimentation des chiens suivant l'invention comporte classiquement au moins une source de protéines d'origine animale ou végétale et/ou au moins une source de glucides lents ou rapides et/ou au moins une source de matière grasse d'origine animale ou végétale. Il se présente globalement sous la forme d'un parallélépipède 1 dont au moins deux faces opposées du parallélépipède comprennent au moins un creux 2 et 2' et au moins une bosse 3 et 3', ledit creux 2 et ladite bosse 3 d'une première face s'étendant au droit de la bosse 3' et respectivement du creux 2' de la face opposée du parallélépipède 1. Ainsi, l'aliment présente une section longitudinale (figure 2 en forme de vague. Chaque creux 2,2' consiste en une concavité et chaque bosse 3,3' consiste en une convexité, le rayon de courbure de chaque concavité 2,2' est différent du rayon de courbure de chaque convexité 3,3'.

Il est bien évident que le rayon de courbure de chaque concavité 2,2' peut être globalement égal au rayon de courbure de chaque convexité 3,3' sans pour autant sortir du cadre de l'invention.

Par ailleurs, les arrêtes entre deux faces adjacentes du parallélépipède 1 sont arrondies afin d'éviter toute blessure du chien lors de la préhension ou de la mastication du chien. L'aliment est obtenu par extrusion à travers une filière d'extrusion en forme de vague.

Cette forme particulière d'aliment permet de diminuer le temps de préhension de l'aliment. En effet, la forme générale de vague de l'aliment procure un décollement d'au moins l'une de ses extrémités quelque soit la position dans laquelle elle est posée sur un plan. Ce décollement d'au moins une des extrémités de l'aliment assure un point de préhension pour les chiens permettant ainsi de diminuer son temps de préhension. Par ailleurs, la forme particulière de l'aliment suivant l'invention permet également d'augmenter le temps de mastication de ce dernier. Cet aliment est particulièrement destiné à l'alimentation des chiens brachycéphales qui, de part leurs caractéristiques morphologiques, ont des difficultés de préhension et de mastication qui se traduisent par un temps de préhension long et une durée de mastication courte des aliments en forme de cylindre de l'art antérieur comme il sera explicité un peu plus loin.

Par ailleurs, la demanderesse a constaté que, outre la forme de l'aliment, les dimensions de ce dernier influent sur le temps de préhension et sur la durée de mastication. Ainsi, afin d'obtenir un temps de préhension et une durée de mastication optimales pour des chiens brachycéphales, le parallélépipède doit présenter un volume compris entre 5000 et 8000 mm³ et/ou une surface projetée sur un plan comprise entre 500 et 700mm² et/ou des dimensions de 25 à 35 mm X 15 à 25 mm X 5 à 11 mm.

### Exemple 1

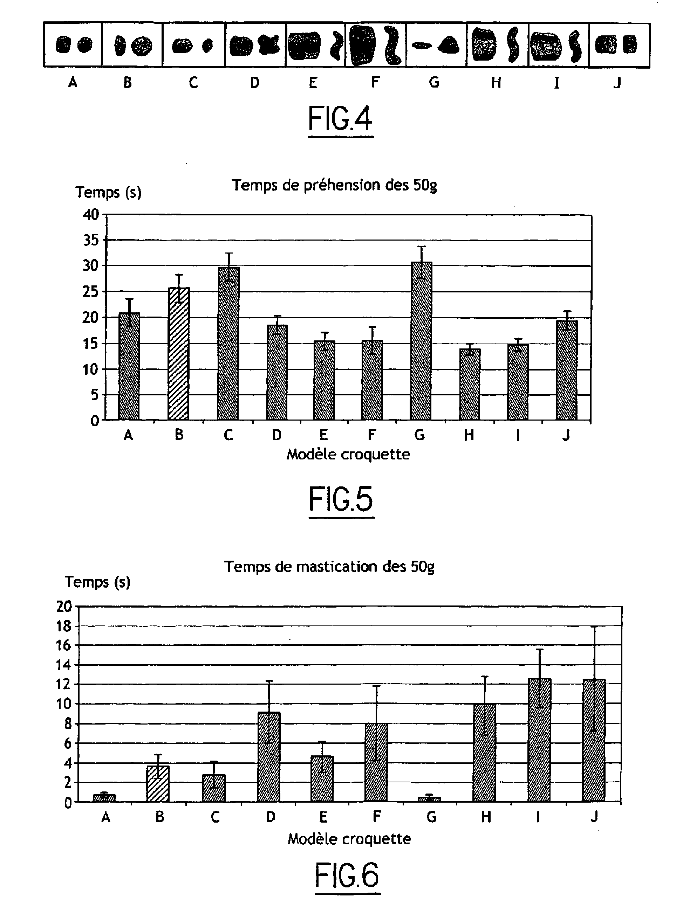

Des tests ont été effectués sur un panel de 18 chiens boxers que l'on a alimenté pendant plusieurs jours avec des croquettes de l'art antérieur (modèles A, B, C, D, G et J) et des croquettes en forme de vague suivant l'invention de différentes dimensions (modèles E, F, H et I) comme indiqués dans le tableau de la figure 4.

Lors des repas des chiens, le temps consacré à la préhension et le temps consacré à la mastication sont chronométrés pour une quantité d'aliment de 50g. Ces mesures du temps de préhension et du temps de mastication sont obtenues à partir de l'analyse de vidéos enregistrées au cours des repas. Ces vidéos sont réalisées au moyen d'un caisson parallélépipédique dont la face supérieure comporte une vitre sur laquelle est placée une gamelle transparente, en verre par exemple, remplie de croquettes. Une caméra numérique et un moyen d'éclairage, tel qu'un néon par exemple, sont placés dans le caisson sous la vitre pour filmer les repas par dessous. Une seconde caméra numérique est avantageusement placée à l'extérieur du caisson pour filmer de côté les repas.

Les temps moyens de préhension des différents modèles de croquette sont consignés dans le graphique sous forme d'histogramme de la figure 5.

Les boxers ont recours à leur langue, leurs babines et leurs dents pour saisir les croquettes ; toutefois, les modes lingual et labial sont les plus utilisés. Les boxers prennent les croquettes en paquet quelle que soit la forme des croquettes.

Le temps de préhension des 50g du modèle B, le plus répandu dans le commerce, est de 26s ce qui le place parmi les modèles les moins bien pris.

Le modèle C, de forme globalement ovale, et le modèle G, en forme de triangle très plat, présentent respectivement des temps de préhension de 30 et 31 s. Le temps de préhension de ces modèles C et G est nettement supérieur au temps de préhension du modèle B.

Le modèle cylindrique A et le modèle cubique J réduisent de 5 à 6s le temps de préhension par rapport au modèle B.

Le modèle D correspond à une croquette en forme de croix offrant une stabilité dans la gamelle et plusieurs points d'accroche. Le temps de préhension du modèle D est inférieur de 7s au temps de préhension du modèle B.

Les modèles E, F et I en forme de vague génèrent des temps de préhension réduits d'environ 11 secondes par rapport au temps de préhension du modèle B. On observera que ces modèles E, F et I en forme de vague sont moins mobiles dans la gamelle que les autres modèles.

Le modèle H également en forme de vague présente le temps de préhension le plus court. Le temps de préhension du modèle H (14 secondes) est deux fois plus court que celui du modèle B (26 secondes).

Ainsi, au niveau de la préhension, les modèles E, F, H et I, en forme de vague, suivant l'invention sont associés aux meilleurs résultats.

Par conséquent, la forme particulière de l'aliment suivant l'invention facilite la préhension.

De la même manière que pour l'analyse du temps de préhension des aliments, un comparatif est réalisé entre les différents modèles de croquettes selon le temps de mastication qui leur est associé.

Les temps moyens de mastication des différents modèles de croquette sont consignés dans le graphique sous forme d'histogramme de la figure 6.

Le modèle de croquette B dit standard présente un temps de mastication très court de 4s.

Le modèle de croquette triangulaire G et le modèle cylindrique A sont associés aux temps de mastication les plus faibles, inférieurs à 1 seconde.

Le modèle ovale C présente un temps de mastication de 3 secondes supérieur au temps de mastication des modèles G et A qui reste, néanmoins inférieur au temps de mastication du modèle de croquette B.

Le modèle D en forme de croix procure un temps de mastication de 9 secondes supérieur au temps de mastication du modèle de croquette B standard.

Le modèle de croquette E en forme de vague augmente le temps de mastication seulement d'une seconde par rapport au temps de mastication du modèle de croquette B standard.

Le modèle de croquette J, en forme de cube, présente un temps de mastication long de 13 secondes, soit 9 secondes de plus que le temps de mastication du modèle de croquette standard B. Toutefois, on rappellera que ce modèle de croquette J présente un temps de préhension extrêmement long également de 20 secondes.

Le modèle de croquette F, en forme de vague, dont la longueur est la plus importante de tous les modèles et dont l'ondulation est la plus marquée, procure un temps de mastication de 8 secondes qui est supérieur de 4 secondes à celui du modèle de croquette standard B.

Le modèle de croquette H, en forme de vague, dont la longueur, la largeur et l'épaisseur de coupe sont inférieures à celles du modèle de croquette en forme de vague F, procure un temps de mastication de 10 secondes, supérieur de 6 secondes à celui du modèle de croquette standard B.

Enfin, le modèle de croquette I, également en forme de vague, dont la longueur de coupe est la plus grande des modèles de croquette E, F, H et I en forme de vague suivant l'invention, comprise entre 28 mm et 29 mm, procure le temps de mastication le plus long de 13 secondes, égal au temps de mastication du modèle cubique J, soit 9 secondes de plus que le temps de mastication du modèle de croquette standard B.

Par conséquent, il apparaît que la forme particulière des croquettes E, F, H et I conformes à l'invention a une influence sur la durée de la mastication.

Pour une ingestion des aliments efficace, les modèles de croquette doivent procurer un temps de préhension réduit et un temps de mastication élevé.

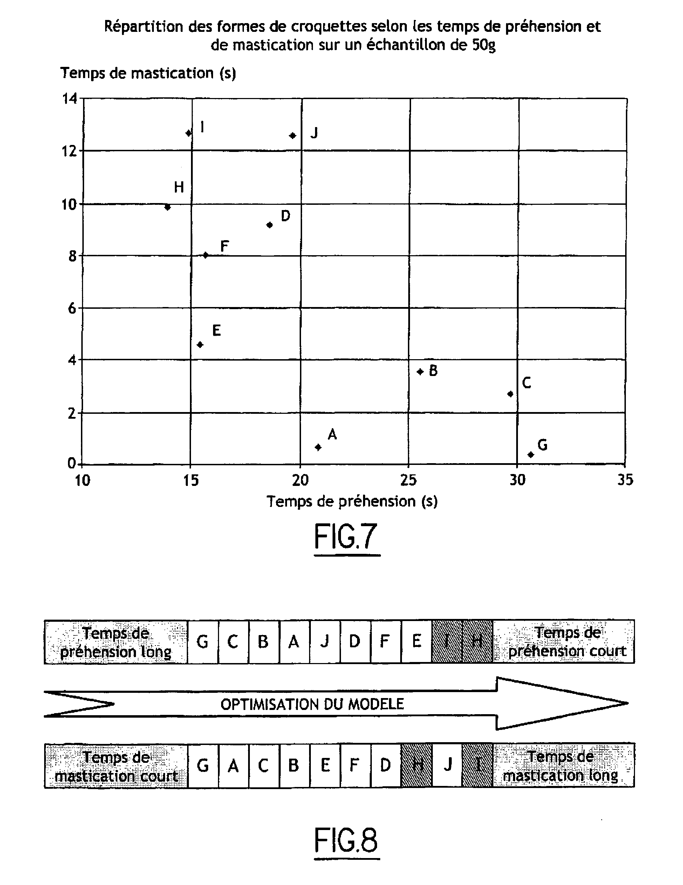

A la lumière du graphique de la figure 7 représentant la répartition des formes de croquettes selon les temps de préhension et de mastication et du tableau de la figure 8 classant les modèles de croquette suivant d'une part leur temps de préhension décroissant et d'autre part leur temps de mastication croissant, il apparaît que les modèles de croquette H et I en forme de vague conformes à l'invention apportent les meilleurs résultats puisqu'ils procurent un temps de préhension court et un temps de mastication long. Néanmoins, le modèle de croquette I présente quelques difficultés dues à ses dimensions lors de sa fabrication contrairement au modèle H qui sera donc, de préférence, retenu.

Par la suite, ce modèle de croquette H a été testé sur une longue période sur le panel des 18 chiens boxers et aucun phénomène de lassitude ni aucun début d'étranglement n'a été constaté.

Nous avons pu voir que la forme de la croquette influe sur le temps de préhension et de mastication des croquettes ; toutefois, pour des croquettes en forme de vague conformes à l'invention, les dimensions de ces dernières ont également une influence sur le temps de préhension et de mastication.

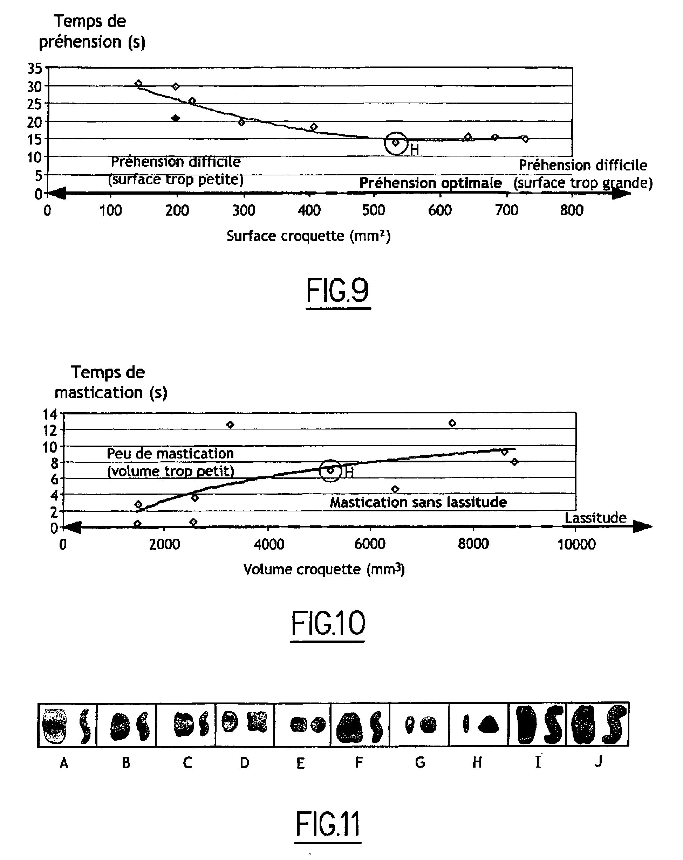

Ainsi, comme on peut le constater sur les graphiques des figures 9 et 10 représentant la relation entre la surface des croquettes et le temps de préhension et respectivement la relation entre le volume des croquettes et le temps de mastication, les meilleurs résultats sont obtenus pour des croquettes dont le volume est compris entre 5000 et 8000 mm³, et plus précisément pour des croquettes dont les dimensions sont de 25 à 35 mm X 15 à 25 mm X 5 à 11 mm. Cela correspond à une croquette dont la surface projetée sur un plan est comprise entre 500 et 700mm².

### Exemple 2

Des tests ont été effectués sur un panel de 27 chiens bulldogs anglais que l'on a alimenté pendant plusieurs jours avec des croquettes de l'art antérieur (modèles D, E, G et H) et des croquettes en forme de vague suivant l'invention de différentes dimensions (modèles A, B, C, F et I) comme indiqués dans le tableau de la figure 11.

De la même manière que dans l'exemple 1, le temps consacré à la préhension et le temps consacré à la mastication sont chronométrés lors des repas où une quantité d'aliment de 50g est présentée aux chiens.

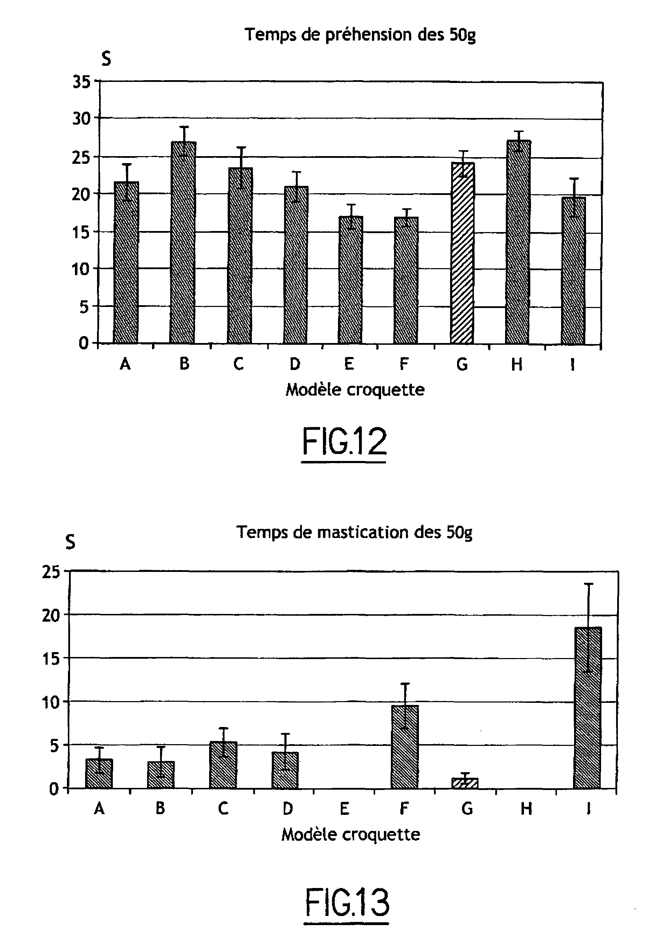

Les temps moyens de préhension des différents modèles de croquette sont consignés dans le graphique sous en forme d'histogramme de la figure 12.

Le modèle de croquette G dit standard présente un temps de préhension relativement long de 24 secondes.

Le temps de préhension des modèles de croquette H et B est supérieur de 3 secondes à celui du modèle de croquette standard G. Le modèle de croquette H correspond à une croquette triangulaire très plate et le modèle de croquette B présente une forme de vague conformément à l'invention de petite taille et avec une ondulation peu marquée.

Le modèle de croquette C présente également une forme de vague conformément à l'invention avec une largeur supérieure par rapport à la largeur du modèle de croquette B. Le temps de préhension du modèle de croquette C est inférieur de 4s à celui du modèle de croquette standard G.

Le modèle de croquette A en forme de vague présente un temps de préhension inférieur de 2 secondes à celui du modèle de croquette standard G.

Le modèle de croquette D en forme de croix présente un temps de préhension similaire à celui du modèle de croquette A, et plus précisément un temps de préhension inférieur de 3 secondes à celui du modèle de croquette standard G.

Le modèle de croquette I est également en forme de vague, ladite croquette présentant une épaisseur et une ondulation plus marquées que les autre modèles de croquette A, B, C et F. Le temps de préhension de ce modèle de croquette I est inférieur de 5 secondes à celui du modèle de croquette standard G.

Le modèle de croquette E correspond à une croquette de forme cylindrique et présente un temps de préhension inférieur de 7 secondes à celui du modèle de croquette standard G. Toutefois, on observera que ce modèle de croquette E roule dans la gamelle et de nombreuses croquettes sont expulsées de la gamelle lorsque le chien tente de se saisir des croquettes.

Le modèle de croquette F, également en forme de vague, présente un des plus petits temps de préhension. En effet, le temps de préhension de ce modèle de croquette F est inférieur de 7 secondes à celui du modèle de croquette standard G sans que des croquettes ne soient expulsées de la gamelle, contrairement au modèle de croquette E cylindrique.

Par conséquent, il apparaît que le modèle de croquette F en forme de vague, conforme à l'invention, présente le temps de préhension le plus faible de tous les modèles testés.

De la même manière que pour l'analyse du temps de préhension des aliments, un comparatif est réalisé entre les différents modèles de croquettes selon le temps de mastication qui leur est associé.

Les temps moyens de mastication des différents modèles de croquette sont consignés dans le graphique sous forme d'histogramme de la figure 13.

Il apparaît que le modèle de croquettes standard G est très peu mastiqué. En effet, le temps de mastication de ces croquettes standard G est de 1 seconde pour 50g de croquettes.

Les modèles de croquette E et H, correspondant aux croquettes cylindriques et respectivement triangulaires, n'induisent pas de mastication. Ces modèles de croquettes sont directement ingérés après préhension.

Les modèles de croquette A et B, en forme de vague, présentent un temps de mastication de 3 secondes, c'est-à-dire trois fois plus élevé que le temps de mastication du modèle de croquette standard G.

Le modèle de croquette D, en forme de croix, présente un temps de mastication de 4 secondes supérieur au temps de mastication du modèle de croquette standard G.

Le temps de mastication du modèle de croquette C, également en forme de vague, est supérieur de 5 secondes à celui du modèle de croquette standard G.

Le modèle de coquette F, en forme de vague, présente un temps de mastication de 8 secondes.

Enfin, le modèle de croquettes I présente un temps de mastication de 18 secondes environ ; soit 18 fois supérieur à celui du modèle de croquette standard G. Le volume de ce modèle de croquette I est le plus important des modèles testés et l'ondulation de la vague est la plus marquée.

Par conséquent, chez le bulldog anglais, il apparaît que la forme particulière des croquettes A, B, C, F et I conformes à l'invention a une influence sur la durée de la mastication.

Pour une ingestion des aliments efficace, les modèles de croquette doivent procurer un temps de préhension réduit et un temps de mastication élevé.

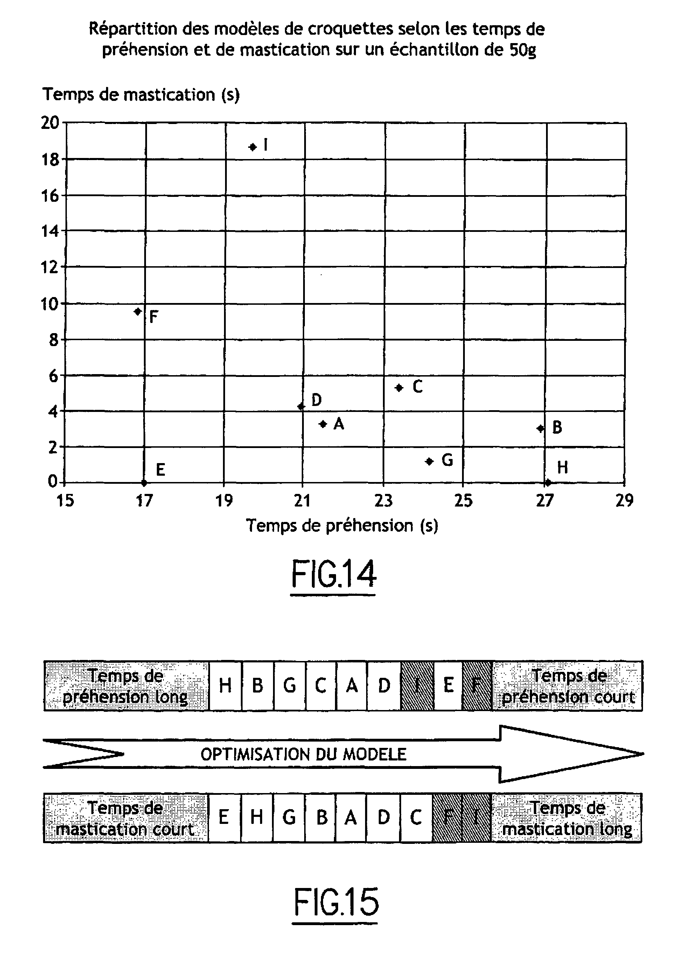

A la lumière du graphique de la figure 14 représentant la répartition des formes de croquettes selon les temps de préhension et de mastication et du tableau de la figure 15 classant les modèles de croquette suivant d'une part leur temps de préhension décroissant et d'autre part leur temps de mastication croissant, il apparaît que les modèles de croquette F et I en forme de vague conformes à l'invention apportent les meilleurs résultats puisqu'ils procurent un temps de préhension court et un temps de mastication long.

Par la suite, ces modèles de croquette F et I ont été testés sur une longue période sur le panel des 27 chiens bulldog anglais.

La consommation du modèle de croquette I à long terme montre un phénomène de lassitude probablement dû aux dimensions de ce modèle de croquette qui rendent difficile la mastication.

Le modèle de croquette F semble le plus adapté, à l'issu des tests sur le long terme, même si 4 chiens ont montrés une certaine lassitude en ne terminant plus les rations de croquettes.

Nous avons pu voir que la forme de la croquette influe sur le temps de préhension et de mastication des croquettes ; toutefois, pour des croquettes en forme de vague conformes à l'invention, les dimensions de ces dernières ont également une influence sur le temps de préhension et de mastication.

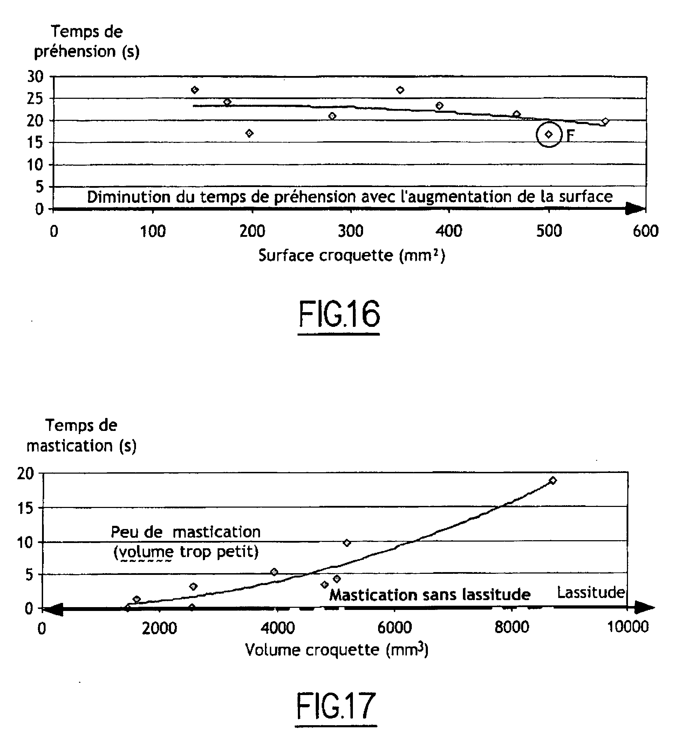

Ainsi, comme on peut le constater sur les graphiques des figures 16 et 17 représentant la relation entre la surface des croquettes et le temps de préhension et respectivement la relation entre le volume des croquettes et le temps de mastication, les meilleurs résultats sont obtenus pour des croquettes dont le volume est compris entre 5000 et 8000 mm³, et plus précisément pour des croquettes dont les dimensions sont de 25 à 35 mm X 15 à 25 mm X 5 à 11 mm. Cela correspond à une croquette dont la surface projetée sur un plan est comprise entre 500 et 700mm².

## Revendications

1. Aliment sec destiné à l'alimentation des chiens du type contenant :
- au moins une source de protéines d'origine animale ou végétale et/ou
- au moins une source de glucides lents ou rapides et/ou
- au moins une source de matière grasse d'origine animale ou végétale,
et se présentant globalement sous la forme d'un parallélépipède (1) ou similaire, **caractérisé en ce que** le parallélépipède (1) présente des dimensions de 25 à 35 mm X 15 à 25 mm X 5 à 11 mm et **en ce qu'**au moins deux faces opposées du parallélépipède (1) comprennent au moins un creux (2,2') et au moins une bosse (3,3'), ledit creux (2) et ladite bosse (3) d'une première face s'étendant au droit de la bosse (3') et respectivement du creux (2') de la face opposée du parallélépipède (1).

2. Aliment selon la revendication précédente, **caractérisé en ce que** chaque creux (2,2') consiste en une concavité.

3. Aliment selon l'une quelconque des revendications 1 ou 2 **caractérisé en ce que** chaque bosse (3,3') consiste en une convexité.

4. Aliment selon les revendications 1 et 2, **caractérisé en ce que** le rayon de courbure de chaque concavité (2,2') est différent du rayon de courbure de chaque convexité (3,3').

5. Aliment selon l'une quelconque des revendications précédentes, **caractérisé en ce que** les arrêtes entre deux faces adjacentes du parallélépipède (1) sont arrondies.

6. Aliment selon l'une quelconque des revendications précédentes, **caractérisé en ce qu'**il présente une surface projetée comprise entre 500 et 700mm².

7. Aliment selon l'une quelconque des revendications précédentes, **caractérisé en ce que** le parallélépipède (1) présente un volume compris entre 5000 et 8000 mm³.

8. Aliment selon l'une quelconque des revendications 1 à 7, **caractérisé en ce qu'**il est utilisé pour l'alimentation de chiens brachycéphales.

## Claims

1. A dry food intended for feeding dogs, of the type containing:
- at least one source of animal or plant protein and/or
- at least one source of slow-release or rapid release carbohydrates and/or
- at least one source of animal or vegetable fat, 10 and
which overall is in the form of a parallelepiped (1) or the like, **characterized in that** the parallelepiped (1) has dimensions of 25 to 35 mm x 15 to 25 mm x 5 to 11 mm and at least two opposite faces of the parallelepiped (1) comprise at least one hollow (2,2') and at least one lump (3,3'), said hollow (2) and said lump (3) on a first face lying 15 opposite the lump (3') and hollow (2') respectively of the opposite face of the parallelepiped (1).

2. The food as claimed in the preceding claim, **characterized in that** each hollow (2,2') consists of a concave region.

3. The food as claimed in either one of claims 1 and 2, **characterized in that** each lump (3,3') consists of a convex region.

4. The food as claimed in claims 1 and 2, **characterized in that** the radius of curvature of each concave region (2,2') differs from the radius of curvature of each convex region (3,3').

5. The food as claimed in any one of the preceding claims, **characterized in that** the corners between two adjacent faces of the parallelepiped (1) are rounded.

6. The food as claimed in any one of the preceding claims, **characterized in that** it has a projected surface area ranging between 500 and 700mm².

7. The food as claimed in any one of the preceding claims, **characterized in that** the parallelepiped (1) has a volume ranging between 5000 and 8000 mm³.

8. The food as claimed in any one of claims 1 to 7, **characterized in that** it is used to feed brachycephalic dogs.

## Patentansprüche

1. Trockenes Nahrungsmittel zur Ernährung von Hunden des Typs, welcher enthält:
- mindestens eine Proteinquelle tierischer oder pflanzlicher Herkunft und/oder
- mindestens eine Quelle schnell oder langsam wirkender Kohlenhydrate und/oder
- mindestens eine Quelle tierischen oder pflanzlichen Fettes,
und der generell in der Form eines Parallelepipeds (1) oder Ähnlichem vorliegt, **dadurch gekennzeichnet, dass** das Parallelepiped (1) die Abmessungen von 25 bis 35 mm X 15 bis 25 mm X 5 bis 11 mm X aufweist und dass mindestens zwei gegenüberliegende Seiten des Parallelepipeds (1) mindestens eine Aushöhlung (2,2') und mindestens einen Höcker (3,3') aufweisen, wobei sich die Aushöhlung (2) und der Höcker (3) einer Seite gemäß dem Höcker (3') bzw. der Aushöhlung (2') der gegenüberliegenden Seite des Parallelepipeds (1) erstrecken.

2. Nahrungsmittel nach dem vorstehenden Anspruch, **dadurch gekennzeichnet, dass** jede Aushöhlung (2,2') aus einer Vertiefung besteht.

3. Nahrungsmittel nach einem der Ansprüche 1 oder 2, **dadurch gekennzeichnet, dass** jeder Höcker (3,3') aus einer Wölbung besteht.

4. Nahrungsmittel nach den Ansprüchen 1 und 2, **dadurch gekennzeichnet, dass** der Krümmungsradius jeder Aushöhlung (2,2') vom Krümmungsradius jeder Wölbung (3,3') verschieden ist.

5. Nahrungsmittel nach einem der vorstehenden Ansprüche, **dadurch gekennzeichnet, dass** die Kanten zwischen zwei benachbarten Flächen des Parallelepipeds (1) abgerundet sind.

6. Nahrungsmittel nach einem der vorstehenden Ansprüche, **dadurch gekennzeichnet, dass** es eine projizierte Fläche von zwischen 500 und 700 mm² aufweist.

7. Nahrungsmittel nach einem der vorstehenden Ansprüche, **dadurch gekennzeichnet, dass** das Parallelepiped (1) ein Volumen von zwischen 5000 und 8000 mm³ aufweist.

8. Nahrungsmittel nach einem der Ansprüche 1 bis 7, **dadurch gekennzeichnet, dass** es zur Ernährung von brachyzephalen Hunden verwendet wird.
